(19) Europäisches Patentamt
European Patent Office
Office européen des brevets

(11) Veröffentlichungsnummer: **0 084 679**
**B1**

(12) # EUROPÄISCHE PATENTSCHRIFT

(45) Veröffentlichungstag der Patentschrift: **19.02.86**

(51) Int. Cl.⁴: **C 08 G 77/46**, B 01 D 19/04

(21) Anmeldenummer: **82112029.2**

(22) Anmeldetag: **27.12.82**

(54) **Organopolysiloxane und deren Verwendung als Antischaummittel in wässrigen Dispersionen und Lösungen von Kunstharzen.**

(30) Priorität: **07.01.82 DE 3200206**

(43) Veröffentlichungstag der Anmeldung:
**03.08.83 Patentblatt 83/31**

(45) Bekanntmachung des Hinweises auf die Patenterteilung:
**19.02.86 Patentblatt 86/8**

(84) Benannte Vertragsstaaten:
**AT BE CH DE FR GB IT LI NL SE**

(56) Entgegenhaltungen:
**EP - A - 0 036 597**
**EP - A - 0 049 834**
**US - A - 3 965 150**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Hempel, Hans-Ulrich, Dr., Wiesengrund 5, D-5063 Overath (DE)**
Erfinder: **Grünert, Margarete, Flottheide 9, D-4044 Kaarst 2 (DE)**
Erfinder: **Tesmann, Holger, Dr., Vennstrasse 61, D-4000 Düsseldorf 12 (DE)**
Erfinder: **Müller, Heinz, Engelshöhe 48, D-5600 Wuppertal-Vohwinkel (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft ein neues Organopolysiloxan, ein Verfahren zu seiner Herstellung sowie seine Verwendung als Antischaummittel in wässrigen Dispersionen und Lösungen von Kunstharzen, wobei das Antischaummittel insbesondere frei ist von mikrofeinem Siliciumdioxid bzw. Aluminiumoxid, die bei der Anwendung in wässrigen Lacksystemen stören würden.

Wässrige Kunstharzlösungen und Dispersionen, die zum Beispiel als Bindemittel für Druckfarben, Holz- und Metalllacke sowie als Überzüge für Papier und Kunststoffe verwendet werden, basieren meist auf wasserlöslichen Alkydharzen, Polyacrylaten oder Polyestern. Als Alkydharze kommen solche mit Carboxylfunktionalität, wie mit Maleinsäure modifizierte Öle, ölmodifizierte Alkyde und ölfreie Polyester in Betracht, wobei neben der Neutralisationskomponente — meist einem Amin — häufig eine Cosolventkomponente anwesend ist. Bei Lacken auf Polyacrylatbasis handelt es sich um copolymere Acrylsäurederivate, die sowohl mit Melamin- oder Harnstoffharzen als auch mit Polyurethanen kombiniert sein können. Als Polyester eignen sich modifizierte ungesättigte Verbindungen in Emulsionsform.

Diese Bindemittelsysteme werfen, bedingt durch die Anwesenheit von Emulgatoren bzw. Salze bildenden Carboxylgruppen, bei der Herstellung und Applikation Schaumprobleme auf, die mit üblichen Entschäumern im allgemeinen nicht zu lösen sind. So erhält man bei Einsatz von herkömmlichen Alkylpolysiloxanen in Form von Emulsionen oder als Lösung in Kohlenwasserstoffen starke Oberflächenstörungen, die dem Fachmann als Krater, Fischaugen und Orangenschaleneffekte bekannt sind. Ein weiterer Nachteil besteht darin, dass solche Zubereitungen, die stets Kieselsäure oder Aluminiumoxid enthalten, relativ rasch sedimentieren und ausserdem bei Glanzlacken den Oberflächenglanz vermindern. Soweit diese Mittel zusätzlich weitere bekannte Schaumdämpfungsmittel enthalten, zum Beispiel solche auf Basis von Mineralölen oder Esterölen auf Basis langkettiger linearer Fettsäuren, kommt es trotz Zusatz von Emulgatoren zu Unverträglichkeiten mit dem Bindemittelsystem sowie Ausschwitzungen auf der Lackoberfläche. Zwar sind aus der DE-OS 2 345 335, DE-OS 2 443 853, DE-OS 2 518 053, DE-OS 2 534 250 und DE-OS 2 829 906 Polysiloxane bzw. Polysiloxanmischpolymere bekannt, die eine höhere Polarität aufweisen und nach Zusatz von Silicium- oder Aluminiumoxid bzw. nach Lösen in organischen Lösungsmitteln, wie niedermolekularen Glykolen, Ketonen oder Estern, eine spontane Entschäumung bewirken, jedoch weisen diese Mittel aufgrund der mineralischen Beimengungen die vorstehend geschilderten Nachteile auf.

Aus der DE-OS 3 011 304 (D 6094) sind Gemische aus Polysiloxan-Polyether-Blockpolymeren, Mineralölen oder fetten Ölen, Polyethylenglykol-Polypropylenglykol-Blockpolymeren bzw. deren Fettsäureester, Emulgiermitteln und fettsauren Erdalkalimetall- und Aluminiumseifen bekannt, die sich zum Entschäumen von Kunstharzdispersionen und Klarlacken eignen und auch bei Anwendung von Siliciumdioxid wirksam sind. Da es sich um ein komplexes Gemisch handelt, bestand Interesse an einfach zusammengesetzten Entschäumern, die in gleicher Weise einsetzbar sind und ebenfalls ohne einen Zusatz an Siliciumdioxid auskommen.

Gegenstand der Erfindung sind Organopolysiloxane der allgemeinen Formel I

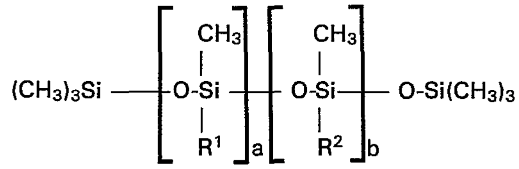 (I)

in denen die Symbole die folgende Bedeutung haben:

$R^1$ = $-(CH_2)_c-CH_3$,
$R^2$ = $-(CH_2)_d-COO(CH_2-CHX-O)_e-R^3$,
$R^3$ = $C_1$-$C_6$-Alkylrest,
X = H, $CH_3$,
a = 28 - 36
b = 5 - 12
c = 5 - 9
d = 8 - 12
e = 1 - 24.

Bevorzugt sind solche Verbindungen, in denen der Index c für 7 und der Index d für 10 steht. Weiterhin sind solche Verbindungen bevorzugt, in denen $R^2$ die folgende Bedeutung hat:

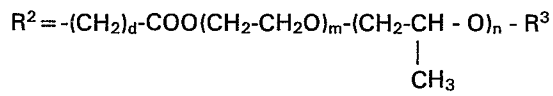

worin m für die Zahlen 1 bis 12 und n für die Zahlen 0 bis 12 stehen.

Die Herstellung der erfindungsgemässen Organopolisiloxane geschieht in an sich bekannter Weise, indem man ein Methylpolysiloxan der Formel II

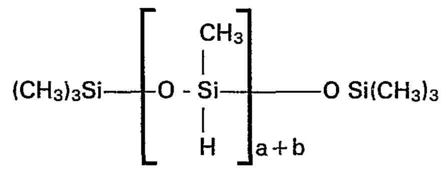 (II)

mit einem Olefin, vorzugsweise n-Octen-1- der Formel III

$$CH_2 = CH - (CH_2)_{c-2}-CH_3 \qquad (III)$$

und dem Ester einer einfach ungesättigten Carbonsäure, vorzugsweise einem Undecylensäuremethylester, der Formel IV

$$CH_2 = CH - (CH_2)_{d-2}-COOR^3 \qquad (IV)$$

in Gegenwart eines Katalysators, beispielsweise Hexachloroplatinsäure, bei Temperaturen oberhalb 80°C, vorzugsweise 100° bis 180°C, umsetzt. Anschliessend wird die Estergruppierung $-COOR^3$ durch Umesterung mit monoalkyliertem Polyglykol der Formel V

$$HO(CH_2-CHX-O)_e-R^3 \qquad (V)$$

unter Entfernung des freigesetzten Alkohols umgeestert.

Das erfindungsgemässe Organopolysiloxan stellt einen hochwirksamen Schauminhibitor dar, der keinen Zusatz an feindispersem Siliciumdioxid bzw. Aluminiumoxid benötigt. Es eignet sich insbesondere zur Verwendung als Entschäumer in wässrigen Lacksystemen, da es im Gegensatz zu den bekannten, üblicherweise mineralische Oxide enthaltenden Silikonentschäumern den Oberflächenglanz der Lackschichten nicht herabsetzt. Ein weiterer Gegenstand der Erfindung ist daher die Verwendung der erfindungsgemässen Organopolysiloxane in wässrigen Dispersionen und Lösungen von Kunstharzen.

Die erfindungsgemässen Organopolysiloxane können ohne weitere Zusätze verwendet oder im Gemisch mit polaren Lösungsmitteln, wie niedermolekularen Alkoholen, Ethern, Glykolen, oligomeren Glykolethern, mono- oder dialkylierten Glykolen, Ketonen und neutralen Estern niedermolekularer Mono- oder Dicarbonsäuren oder Gemischen derartiger polarer Lösungsmittel eingesetzt werden. Beispiele hierfür sind — ohne dass damit eine Einschränkung auf die nachfolgend genannten Verbindungen verbunden wäre — Ethanol, Propanol, i-Propanol, Butanol, Ethylenglykol, Propylenglykol, Butylenglykol, Mono-$C_{1-4}$-alkylether bzw. Di-$C_{1-4}$-alkylether von Ethylen-, Propylen- oder Butylenglykol bzw. deren Oligomeren, Polyethylen- bzw. Polypropylenglykole mit durchschnittlich 2 bis 10 Glykolethereinheiten, Methylethylketon, Ethylacetat und Propylacetat.

Weiterhin können die Organopolysiloxane mit an sich bekannten Entschäumern anderer Konstitution verschnitten werden, wodurch vielfach Einsparungen ohne nennenswerten Abfall der Entschäumerwirkung erzielt werden können. Derartige Zusatzstoffe sind insbesondere neutrale Ester aus gesättigten oder ungesättigten geradkettigen oder verzweigten, 4 bis 12 Kohlenstoffatome aufweisenden Mono- und Dicarbonsäuren und verzweigten, 4 bis 12 Kohlenstoffatome aufweisenden Monoalkoholen. Die dem Ester zugrundeliegende Säure kann geradkettig oder verzweigt, gesättigt oder ungesättigt sein und weist 4 bis 12 Kohlenstoffatome auf. Geeignet sind z.B. Fettsäuren, wie Butter-, Valerian-, Capron-, Önanth-, Capryl-, Pelargon-, Caprin-, Laurin- und Undecensäure, ferner methylverzweigte Fettsäuren aus der Oxosynthese bzw. Isosäuren, wie Isooctan-, Isononan- und Isodecansäure, in 2-Stellung ethylverzweigte Fettsäuren, wie 2-Ethylhexansäure und 2-Ethyldecansäure. Brauchbare Dicarbonsäuren sind z.B. Bernstein-, Malein-, Glutar-, Adipin-, Pimelin-, Kork-, Azelain-, Sebacin- und Dodecandisäure.

Die Alkoholkomponente leitet sich von verzweigtkettigen, gesättigten oder ungesättigten Monoalkoholen mit 4 bis 12 Kohlenstoffatomen ab. Geeignet sind z.B. Isobutanol, Isoamylalkohol, Isohexanol, Isoheptanol, Isooctanol, 2,2,4-Trimethylpentanol-(-1), 2,6-Dimethylheptanol(-4), 2,6,8-Trimethylnonanol(-4), ferner methylverzweigte $C_4$-$C_{12}$-Alkanole aus der Oxosynthese und Guerbetalkohole, wie 2-Ethylhexanol und 2-Propylheptanol.

Auch Gemische von Carbonsäureestern mit unterschiedlichem Säure- bzw. Alkoholrest können verwendet werden.

In den Entschäumergemischen aus Organopolysiloxan und den vorgenannten Estern kann der Anteil der Ester bis zu 98 Gew.-% betragen. Mit Vorteil werden Gemische aus 10 bis 50 Gew.-% Organopolysiloxan und 50 bis 90 Gew.-% Ester verwendet.

Das Einarbeiten der erfindungsgemässen Entschäumer bzw. Entschäumungsgemische zu den wässrigen Kunstharzdispersionen und Homogenisieren bietet ebenfalls keine Probleme. Der Anteil des Entschäumergemisches in diesen Dispersionen richtet sich danach, dass die Bildung von Schäumen bei der Verarbeitung der Dispersionen weitgehend bis vollständig unterdrückt wird. Im allgemeinen reichen hierzu 0,05 bis 3 Gew.-%, vorzugsweise 0,1 bis 1,5 Gew.-%, bezogen auf die Dispersion bzw. Lösung aus.

*Beispiel 1*

1120 g (10 Mol) n-Octen-1, 396 g (2 Mol) Undecylensäuremethylester und 25 mg Hexachloroplatinsäure-Hydrat (Platingehalt 37 Gew.-%, gesättigte Lösung in Diethylenglykoldimethylether) wurden bei 120°C unter Rühren (Stickstoffatmosphäre) im Verlauf von 3 Std. mit 600 g eines Methyl-Wasserstoff-Polysiloxans der Formel II ($a+b = 40$) versetzt. Nach beendeter Zugabe wurde die Reaktionstemperatur auf 150°C erhöht und 3 Std. auf dieser Höhe gehalten. Nach dieser Zeit zeigte sich eine dem Reaktionsgemisch entnommene Probe im Infrarotspektrum praktisch keine Si-H-Banden mehr. Darauf wurde der Ansatz zur Entfernung von überschüssigem n-Octen-1 und Undecylensäuremethylester bis zu einer Sumpftemperatur von 220°C bei 18 mbar andestilliert. Das resultierende Produkt wies eine Verseifungszahl von 56,0 auf, woraus sich für den Index a 33 und den Index b 7 errechnet.

200 g dieses Produkts wurden mit 62 g eines Monoethylpolyglykolethers der Formel V mit $e = 6$, $X = H$ und $R = C_2H_5$, der durch Anlagerung von Ethylenoxid an Ethanol (Molverhältnis 6 : 1) hergestellt worden war, sowie 3 g Toluol-4-sulfonsäure und 3 g Aktivkohle versetzt. Der Ansatz wurde unter Rühren in einer Stickstoffatmosphäre 2 Std. auf 160°C erhitzt. Hierbei destillierte bereits ein Teil des durch die Umsetzung gebildeten Methanols ab. Danach wurde der Druck in der Apparatur für 5 Min. auf 18 mbar gesenkt, um weiteres Methanol zu entfernen. Anschliessend wurde der Ansatz noch 1 Std. unter Normaldruck bei 160°C gehalten und dann abgekühlt. Während des Abkühlens wurden bei 100°C zur Neutralisation des Katalysators 3 g Tributylamin zugesetzt. Nach Stehen über Nacht wurde das Produkt filtriert, um ausgefallenes Tributylammonium-toluol-4-sulfonat zu entfernen. Das entstandene klare Endprodukt wies eine Viskosität von 255 mPa.s auf (Brookfield, 22°C).

*Beispiel 2*

In gleicher Weise, wie im Beispiel 1 beschrieben, wurde unter Verwendung von n-Octen-1 ($c = 7$) und Undecylenmethylester ($d = 10$) sowie Umesterung mit Monoethylpolyethylenglykolether ($e = 4$) ein Organopolysiloxan mit $a = 32$ und $b = 8$ hergestellt, das eine Viskosität von 240 mPa.s (Brookfield, 22°C) aufwies.

*Beispiel 3*

In gleicher Weise, wie in Beispiel 1 beschrieben, wurde unter Verwendung von n-Octen-1 (c = 7) und Undecylenmethylester (d = 10) sowie Umesterung mit Monoethylpolyethylenglykolether (e = 8) ein Organopolysiloxan mit a = 34 und b = 6 hergestellt, das eine Viskosität von 245 mPa.s (Brookfield, 22°C) aufwies.

*Beispiel 4*

Entsprechend den Angabendes Beispiels 1 wurde 1064 g (9,5 Mol) n-Octen-1 und 49,5 g (2,5 Mol) Undecylensäuremethylester mit 600 g Methyl-Wasserstoff-Polysiloxan (a + b = 40) in Gegenwart von Hexachloroplatinsäure umgesetzt. Nach vollständiger Umsetzung und Abtrennung des überschüssigen Octens und Esters wurden 200 g des Produkts mit 99 g eines Anlagerungsprodukts von Propylenoxid und Ethylenoxid an n-Butanol der Formel

$$HO - (C_2H_4 - O)_6 - (C_3H_6 - O)_3 - C_4H_9$$

wie in Beispiel 1 beschrieben umgeestert.

Das erhaltene Organopolysiloxan mit a = 31 und b = 9 wies eine Viskosität von 280 mPa.s (Brookfield, 22°C) auf.

*Beispiel 5*

Jeweils 20 Gew.-% der Organopolysiloxane nach Beispiel 1 bis 4 wurden mit 80 Gew.-% Diisobutyladipat vermischt. Der erhaltene Entschäumer wurde in wässrige Kunstharzdispersionen folgender Zusammensetzung eingearbeitet (Angaben in Gewichtsprozent):

A. *Alkydharzlack*

22,5% Sojaölalkydharz (isocyanatomodifiziert)
1,4% Triethylamin
4,4% Ethylglykol
0,3% Butylglykol
1,7% n-Butanol
43,3% Wasser, deionisiert
24,6% Pigment ($TiO_2$, Aluminiumsilikat, Dolomit Talkum)
0,4% Verdickungsmittel
1,4% Entschäumer nach Beispiel 1 bis 4.

Es handelt sich um eine weiss-pigmentierte Korrosionsschutz-Grundierung.

B. *Polyacrylat-Lack*

73,5% Polyacrylat-Bindemittel (Rhoplex® WL 81)
12,6 % Wasser, deionisiert
12,3 % Butylglykol
1,45% Lackadditive (Filmbildungs- und Slip-Hilfsmittel)
0,15% Entschäumer nach Beispiel 1 bis 4.

Es handelt sich um einen nicht pigmentierten lufttrocknenden Dispersionslack für Metall-, Kunststoff- oder Holzoberflächen.

C. *Einbrennlack für Metall*

3,77% Melaminharz (Härter)
0,31% Dimethylethanolamin
10,75% Wasser, deionisiert
0,88% Ethanol
27,34% Titandioxid-Pigment
50,29% Hydroxyacrylat-Copolymer-Bindemittel, 55%ige wässrige Dispersion (Synresyl® TP 141 DF)
1,10% Filmbildungsadditiv
4,56% Ethylenglykol
1,1 % Entschäumer nach Beispiel 1 bis 4.

Die anwendungstechnische Prüfung erfolgte mittels «Rakeltest» auf folgendem Untergrund:

a) Stahlplatten (Tiefziehmaterial)
b) Holzplatten (Nussbaum-furniert)
c) Glasplatten.

Der entschäumerhaltige Lack wurde in einer Mischvorrichtung, einem sogenannten Dissolver, 2 Min. bei einer Drehzahl von 2000 Umdrehungen pro Minute gemischt und in ein Filmziehgerät überführt, welches anschliessend mit gleichbleibender Geschwindigkeit langsam über den jeweiligen planen Untergrund gezogen wurde. Die Dicke der Filme betrug 200 µm bzw. 500 µm.

Dieser «Rakeltest» wurde nach vierwöchiger Lagerung der Dispersionen bei Raumtemperatur wiederholt, um die Lagerstabilität sowie ein eventuelles Nachlassen der Wirksamkeit der eingesetzten Entschäumer festzustellen.

Der so entstandene Film wurde entsprechend der Rezeptur luft- oder ofengetrocknet und Lufteinschlüsse und Verlaufs- bzw. Siliconstörungen visuell beurteilt.

Es wurde in allen Fällen eine hervorragende Wirkung und keine Verlaufsstörungen festgestellt. Es konnten keine Oberflächenstörungen und Glanzverluste im Gegensatz zu mineralölhaltigen Entschäumerformulierungen festgestellt werden.

**Patentansprüche**

1. Organopolysiloxane der allgemeinen Formel I

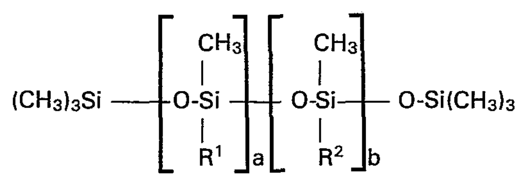

(I)

in denen die Symbole die folgende Bedeutung haben:

$R^1 = -(CH_2)_c-CH_3$,
$R^2 = -(CH_2)_d-COO(CH_2-CHX-O)_e-R^3$,
$R^3 = C_1-C_6$-Alkylrest,
$X = H, CH_3$,
a = 28 - 36
b = 5 - 12
c = 5 - 9
d = 8 - 12
e = 1 - 24.

2. Verbindung nach Anspruch 1, gekennzeichnet durch die Indices c = 7 und d = 10.

3. Verbindung nach Anspruch 1 und 2, gekennzeichnet durch

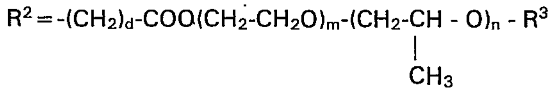

worin m für die Zahlen 1 bis 12 und n für die Zahlen 0 bis 12 steht.

4. Verfahren zur Herstellung eines Polysiloxans der Formel I, dadurch gekennzeichnet, dass man ein Methylpolysiloxan der Formel II

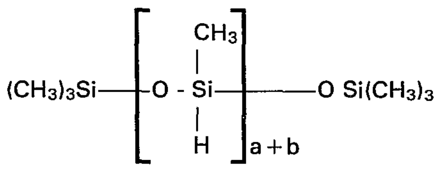 (II)

mit einem Olefin der Formel III

$CH_2 = CH - (CH_2)_{c-2}-CH_3$ (III)

und dem Ester einer einfach ungesättigten Carbonsäure der Formel IV

$CH_2 = CH - (CH_2)_{d-2}-COOR^3$ (IV)

in Gegenwart eines Katalysators bei Temperaturen oberhalb 80°C, vorzugsweise 100° bis 180°C umsetzt und mit monoalkyliertem Polyglykol der Formel V

$HO(CH_2-CHX-O)_e-R^3$ (V)

unter Entfernung des freigesetzten Alkohols umestert.

5. Verwendung eines Organopolysiloxans der Formel I als Entschäumer in wässrigen Dispersionen und Lösungen von Kunstharzen.

**Claims**

1. Organopolysiloxanes corresponding to the following general formula

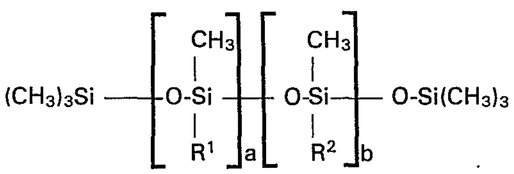 (I)

in which the symbols have the following meanings:

$R^1$ = $-(CH_2)_c-CH_3$,
$R^2$ = $-(CH_2)_d-COO(CH_2-CHX-O)_e-R^3$,
$R^3$ = $C_1$-$C_6$ Alkyl group,
X = H, $CH_3$,
a = 28 - 36
b = 5 - 12
c = 5 - 9
d = 8 - 12
e = 1 - 24.

2. The compound claimed in Claim 1, characterized by the indices c = 7 and d = 10.

3. The compound claimed in Claims 1 and 2, characterized by

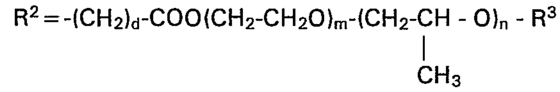

in which m = 1-12 and n = 0-12.

4. A process for producing a polysiloxane corresponding to formula I, characterized in that a methylpolysiloxane corresponding to the following formula

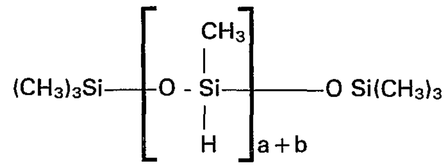 (II)

is reacted with an olefin corresponding to the following formula

$CH_2 = CH - (CH_2)_{c-2}-CH_3$ (III)

and the ester of a monounsaturated carboxylic acid corresponding to the following formula

$CH_2 = CH - (CH_2)_{d-2}-COOR^3$ (IV)

in the presence of a catalyst at temperatures above 80°C and preferably at temperatures of from 100 to 180°C transesterified with monoalkylated polyglycol corresponding to the following formula

$HO(CH_2-CHX-O)_e-R^3$ (V)

with removal of the alcohol released.

5. The use of an organopolysiloxane corresponding to formula I as a defoaming agent in aqueous dispersions and solutions of synthetic resins.

**Revendications**

1. Organopolysiloxanes répondant à la formule général:

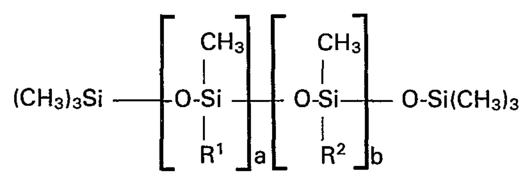 (I)

où les symboles ont les significations suivantes:

$R^1$ = $-(CH_2)_c-CH_3$,
$R^2$ = $-(CH_2)_d-COO(CH_2-CHX-O)_e-R^3$,
$R^3$ = reste alkyl en $C_1$-$C_6$
X = H, $CH_3$,
a = 28 - 36
b = 5 - 12
c = 5 - 9
d = 8 - 12
e = 1 - 24.

2. Composé suivant la revendication 1, caractérisé en ce que l'indice c est égal à 7, et l'indice d = 10.

3. Composé suivant les revendications 1 et 2, caractérisé en ce que:

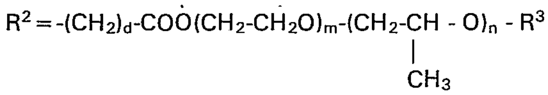

où m répond à des nombres 1 à 12, et n à des nombres 0 à 12.

4. Procédé pour la fabrication d'un polysiloxane répontant à la formule I, caractérisé en ce que l'on fait réagir un méthylpolysiloxane répondant à la formule II:

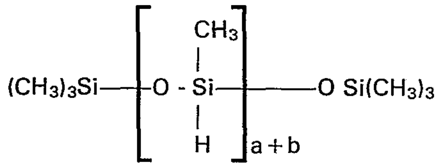 (II)

avec une oléfine de formule III:

$$CH_2 = CH - (CH_2)_{c-2}-CH_3 \quad (III)$$

et l'ester d'un acide carboxylique simplement insaturé de formule IV:

$$CH_2 = CH - (CH_2)_{d-2}-COOR^3 \quad (IV)$$

en presence d'un catalyseur, à des températures de 80°C, de préférence de 100 à 180°C, et procède à une transestérification avec un polyglycol mono-alcoylé de formule V:

$$HO(CH_2-CHX-O)_e-R^3 \quad (V)$$

puis élimine l'alcool libéré.

5. Utilisation d'un organopolysiloxane de formule I comme anti-mousse dans des dispersions et solutions aqueuses de résines synthétiques.